# EUROPEAN PATENT APPLICATION

(11) **EP 0 542 134 A1**
(43) Date of publication of application: **19.05.1993**
(21) Application number: 92118958.5
(22) Date of filing: 05.11.1992
(51) Int. Cl.: F16D 55/228, B62L 1/00, F16D 65/16

(54) **Disk brake**

(30) Priority: 14.11.1991 IT BO910423
(71) Applicant: BASSANO GRIMECA S.P.A., I-40068 S. Lazzaro Di Savena, Prov. of Bologna (IT)
(72) Inventor: Grillini, Angiolino, I-40068 S. Lazzaro di Savena, (Bologna) (IT)
(74) Representative: Modiano, Guido, Dr.-Ing.

(57) **Abstract**

Disk brake including: a fixed body (1,2) which defines an opening (5) through which a braking disk rotates and toward which two respective opposite and coaxial seats (9) open; pistons (10,11) which, together with friction pads (12,13), compose braking shoes which are guided in the seats; a brake actuation lever composed of a pair of arms (30,31), each of which is rigidly rotationally coupled to a respective piston and having ends connected to a traction element; tear-drop notches (21) in the pistons and asymmetrical tear-drop notches (24) in disks (17,18) which are rigid with the respective fixed body portions (1,2); and balls arranged between the notches (21 and 24) for axially moving the pistons against one another and the engagement of the friction pads against the braking disk when, by actuating the traction element, the lever is rotated in one direction of rotation; the arms being shaped, with folded lines (39,39a), so as to act elastically against the pistons so as to space them in the position for the disengagement of the pads from the braking disk when the action of the traction element ceases.

## Description

The present invention relates to a mechanically-operated disk brake, in particular for two-wheeled vehicles such as bicycles, mopeds, motorcycles and other applications.

As is known, disk brakes comprise a disk which is rigidly coupled to the wheel to be braked and against which two opposite fluid- or mechanically-activated shoes are pressed, absorbing the kinetic energy of the wheel by friction.

Fluid-operated disk brakes have the problem of a certain constructive complexity which is due indeed to the need to provide a hydraulic system.

Mechanically-operated disk brakes are known from the German publications no. 2522625, 3043700 and from German patents no. 1530500, 1630244 and 2229481. In the disk brakes described in these documents there is an actuation lever which, when turned by the user, acts by means of an eccentric element or a screw on a braking shoe. The shoe, by being moved axially (i.e. at right angles to the disk), abuts on one face of the disk and causes, by reaction, the movement of the other shoe onto the other face of the disk, so that said disk, being clamped between the shoes, is braked. These kinds of brakes have the severe problem that since the stroke of the actuation lever must determine the axial movement of two pads, such stroke is rather large and it rapidly becomes larger as the wear of the pads progresses. British patent no. 1528967 and the German publication no. 2754099 describe disk brakes in which a lever is associated with each shoe and acts on the respective shoe by means of an eccentric element. In these brakes, when the levers are actuated the pads perform movements which have radial and tangent components on the disk, so that the axial thrust point does not remain at the center of the pads, with the consequence that the pads wear in a wedge-like shape, with the related rapid degeneration due to the increase in the displacement of the thrust point.

The technical aim of the present invention is to propose a disk brake which has fully mechanical operation, so as to be economically more advantageous than hydraulic ones as regards both its manufacture and its installation, and which allows to achieve uniform pad wear.

This aim is achieved with a mechanically-operated disk brake comprising: a fixed body which defines an opening through which a braking disk rotates and toward which two respective opposite and coaxial seats open; pistons which, together with friction pads, compose braking shoes which are guided in the seats; a brake actuation lever composed of a pair of arms, each arm being rigidly rotationally coupled to a respective piston and having its ends connected to a traction element; and means, arranged between the pistons and the body, for axially moving the pistons against one another for the engagement of the friction pads against the braking disk when, by actuating the traction element, the lever is rotated in one direction of rotation; the arms being shaped so as to act elastically against said pistons so as to space said pistons in the position for the disengagement of the pads from the braking disk when the action of the traction element ceases.

Further advantages and characteristics of the present invention will become apparent from the following description thereof, and with reference to the accompanying drawings, wherein:
figure 1 is a side view of a brake according to the present invention;
figure 2 is a sectional view, taken along the plane II-II of figure 1;
figures 3 and 4 are partial sectional views of two operating positions of a shoe of the brake;
figure 5 is an exploded view of the brake;
figures 6 and 7 are sectional views of two embodiments of the disk brake;
figure 8 is a perspective view of a detail of the pistons;
figures 9 and 10 are profile views of the two arms which compose the lever in the inactive position and in the braking position of the brake;
figure 11 is a sectional side view, taken along the plane XI-XI of figure 7, which illustrates the rotary coupling between the arms and the pistons.

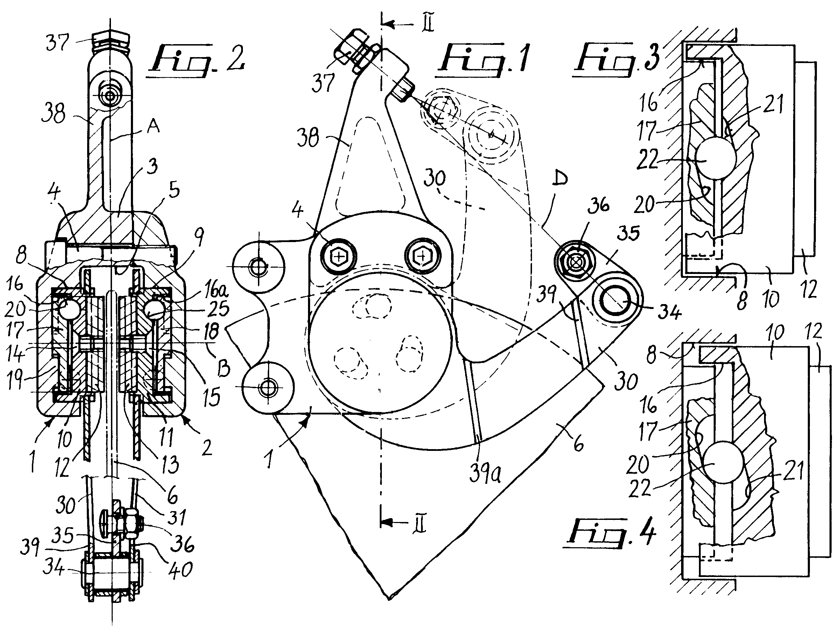

In figures 1-5, the numerals 1 and 2 designate two shoe elements which compose the brake body. The element 2 is fixed against a raised portion 3 of the element 1 by means of screws 4. The raised portion 3 forms, between the shoes 1 and 2, an opening 5 through which the braking disk 6 rotates. The body of the brake is fixed to stationary parts of the vehicle (bicycle, moped, motorcycle) or other structure by means of screws 7 which are driven through the element 1 so that the central plane A of the brake coincides with the plane of the disk 6.

Two cylindrical seats 8 and 9 are defined in the opposite faces of the elements 1 and 2, are mutually coaxial along the axis B, which is perpendicular to the plane A, and are open toward the opening 5.

Two cylindrical pistons 10 and 11 are axially guided in the seats 8 and 9 and have, on their opposite surfaces, friction pads 12 and 13 which are fixed by means of screws 14 and 15 and are suitable to act on the opposite faces of the disk 6. When the pistons 10 and 11 are fully inserted in the seats 8 and 9, the friction pads do not touch the disk 6. The pistons 10 and 11 and the pads 12 and 13 compose the braking shoes of the brake.

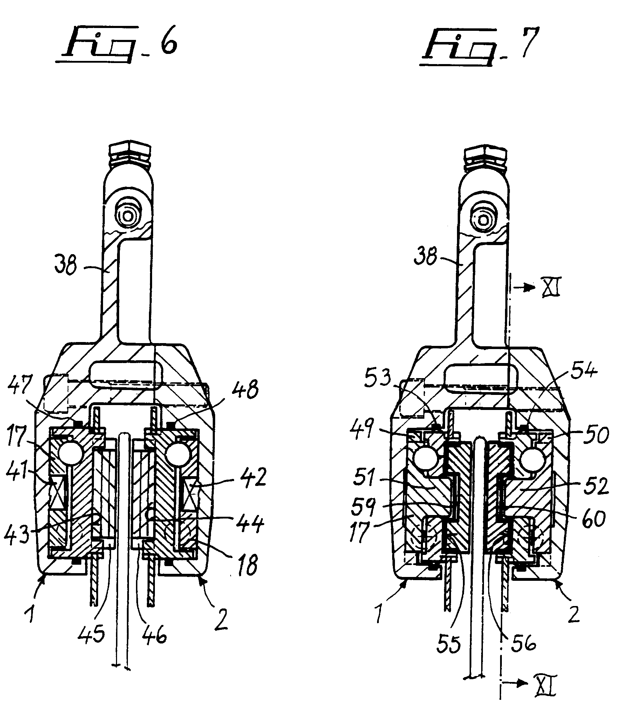

Seats 16 and 16a for disks 17 and 18 which rest against the bottom of the seats 8 and 9 are defined in the pistons 10 and 11 on the side opposite to the friction pads 12 and 13. The disks 17 and 18 have, on their face which adheres to the bottom of the seats 8 and 9, three radial grooves 17a, 18a in which respective teeth 19 and 19a, which protrude from the bottom of the seats 8 and 9, engage. In this manner the disks 17 and 18 are rigidly rotationally coupled to the elements 1 and 2. Naturally it is possible to provide other solutions to prevent the rotation of the disks 17 and 18, as described hereinafter regarding figures 6, 7 and 8.

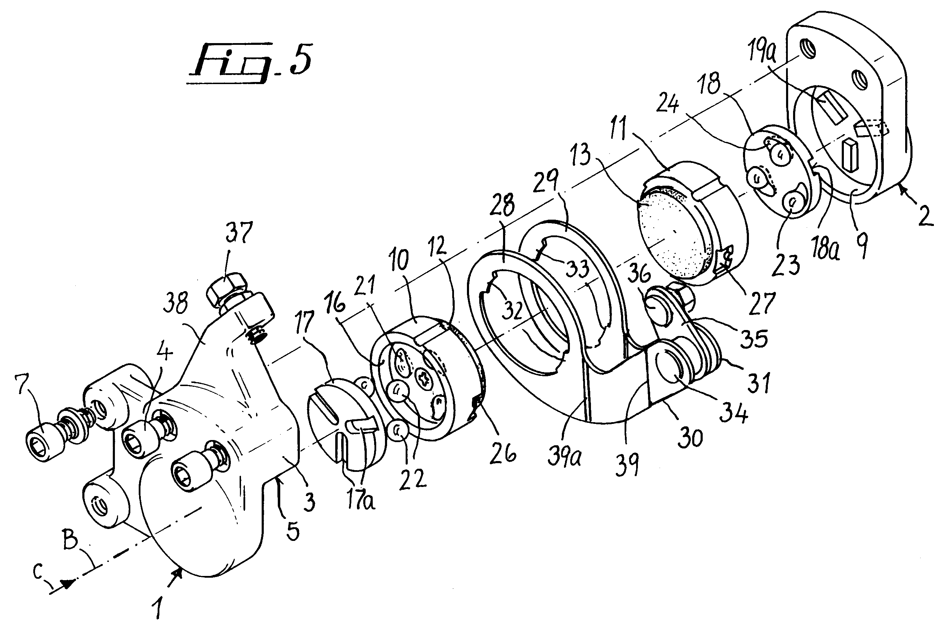

A set of three notches 20 is defined in the face of the disk 17 which is contiguous to the piston 10; said notches are angularly equidistant and elongated around the axis B. Using the direction C of the axis B (figure 5) as viewing reference, the notches 20 of the disk 17 have a depth which decrease in a counterclockwise direction.

Similarly, a set of three notches 21, similar to the notches 20 but directed clockwise, is defined in the bottom of the seat 16. Each notch 20 faces a respective notch 21, so that three balls 22, whose radius is slightly larger than the depth of the notches 20 and 21, can engage in the mutually facing notches.

Balls 23 are also arranged between the disk 18 and the piston 11 and engage notches 24 and 25 of the disk 18 and of the piston 11 whose depths decrease in counterclockwise and clockwise directions respectively, exactly like the notches 20 and 21.

The ends of the pistons 10 and 11, on the side of the pads 12 and 13, protrude into the opening 5 and have a pair of recesses 26 and 27 defined peripherally. The recesses of each pair are diametrical with respect to the axis B and are open laterally and on the front faces of the pistons.

Rings 28 and 29 are arranged around the ends of the pistons 10 and 11 which protrude into the opening 6 and are integral parts of respective arms 30 and 31 which are tangentially blended with the rings and constitute the brake actuation lever. Each ring 28 and 29 is provided with a pair of diametrically opposite internal teeth 32 and 33 which are sized so as to engage in the recesses 26 and 27 and provide a rotary coupling with the pistons 10 and 11.

The arms 30 and 31 are mutually rigidly connected by a pin 34 which passes through their end and which also acts as an articulation pin for a strip 35 which is provided with a conventional screw 36 for the coupling of a traction element D for the actuation of the brake, for example a cable. The traction element D is guided through a perforated bolt 37 which is screwed into a wing 38 which protrudes from the raised portion 3 of the element 1 in the plane A. The perforated bolt 37 traditionally has a recessed head for the abutment of the guiding sheath of the traction element D.

The arms 30 and 31 have fold lines 39, 40 and 39a, 40a (see figures 2, 5, 9 and 10), so that they assume a divaricated arrangement which when the brake is inactive causes a lateral elastic force which forces the rings 28 and 29 to act against the pistons 10 and 11, pushing them into their respective seats 8 and 9 and keeping them spaced. The fold lines 39, 40 and 39a, 40a are mutually parallel and substantially perpendicular to the line which connects the center of the rings to the pin 34.

Operation of the described brake is as follows.

In the inactive condition, the brake is in the position shown in figures 1 to 3, in which, as shown in figure 3, the balls 22 and 23 engage in the deepest regions of the notches 20, 21 and 24, 25. In this position, the pistons 10 and 11 are spaced due to the elastic expansion of the arms 30 and 31, so as to allow the free rotation of the disk 6.

When, during braking, the traction element D is actuated, the arms 30 and 31 oscillate toward the position shown in broken lines in figure 1 and rotate the pistons 10 and 11 with respect to the disks 17 and 18.

Consequently, the balls 22 and 23 are forced to roll along the ramps constituted by the bottom of the notches 20, 21 and 24, 25. In this manner (see figure 4) the pistons 10 and 11 undergo an axial movement toward one another which causes the contact of the pads 12 and 13 with the disk 6 and the braking effect.

If the traction element D is released, the elastic divarication pre-loading acquired by the arms 30 and 31 due to the folds 39, 40 and 39a, 40a and due to the flexing caused by the movement of the pistons 10 and 11 actuates said pistons to retract into the seats 8 and 9. However, the shape of the notches 20, 21 and 24,25 produces a tangent component which causes a screwing movement of the pistons 10 and 11 which returns the arms 30 and 31 to the initial position.

The fundamental prerogative of the described brake is constituted by the fact that the pistons 10 and 11, during their strokes toward the disk, are pushed by the balls 22 and 23 in a direction which is strictly perpendicular to the plane A. The strokes of the pistons are furthermore always equal. In this manner the pads wear to an equal extent and are not subject to wedge-shaped wear.

The described brake can have numerous modifications and variations.

Figure 6 shows a solution wherein the rotary coupling of the disks 17 and 18 is provided by means of square pins 41 and 42 which engage in a prism-like manner in corresponding square holes of the disks 17 and 18.

The friction pads are furthermore partially sunk in recesses 43 and 44 of the pistons and are provided with perimetric teeth 45 and 46 which, by engaging in corresponding peripheral indents of said recesses, prevent the rotation of the pads.

Preferably, a lubricating fluid is arranged in the interspaces comprised between the disks 17 and 18 and the respective pistons 10 and 11, whereas sealing rings 47 and 48, which are embedded in annular grooves of the seats 8 and 9 and adhere to the outer surface of the pistons, prevent the penetration of dust or foreign matter which might compromise the functionality of the brake.

In the embodiment of figure 7, the disks 17 and 18 are provided with peripheral teeth 49 and 50 which, by engaging in notches of the seats 8 and 9, prevent the rotation of said disks. The disks furthermore have a central pin 51 and 52 which acts as guide for the pistons 10 and 11, on the outside of which sealing rings 53 and 54 adhere. The numerals 55 and 56 designate recesses which are defined frontally with respect to the pistons and accommodate the friction pads.

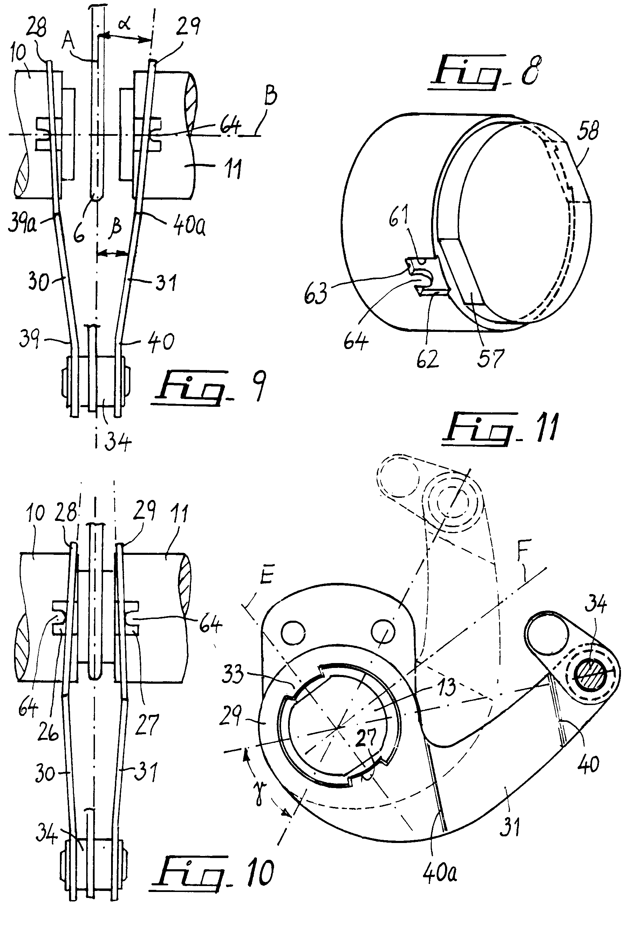

Rotation of the pads is prevented by providing two parallel flat portions 57 and 58 (see figure 8) on the periphery of each pad which, by coupling with respective flat portions of the wall which circumscribes the recesses 55 and 56, defines a rotation-preventing prism-like coupling. Conveniently, thin plates 59 and 60 suitable to prevent lubricant leaks are interposed between the pads 12 and 13 and the pistons.

In a further embodiment of the disk brake according to the invention, the axial movement of the pistons is produced by providing a screw coupling of the pistons in the seats 8 and 9, so as to produce the same effect as the notches 20, 21 and 24, 25 and balls 22 and 23 of the above described example.

In another embodiment, the thrust for the divarication of the arms 30 and 31 is obtained by interposing a spring which acts by expanding between the arms 30 and 31 on the outside of the disk 6.

According to an advantageous embodiment, illustrated in figures 8, 9 and 10, each one of the recesses 26 and 27 is provided with two walls 61 and 62, which are parallel to the axis B, and with a circular wall 63 which lies in a plane which is perpendicular to the axis B. A tooth 64 with a rounded end extends axially from the central region of each circular wall 63 toward the front face of the respective piston 10 and 11, i.e. toward the pad 12 and 13.

The internal teeth 32 and 33 of the rings 28 and 29 rest on the ends of the teeth 64. In this manner, the rings 28 and 29, under the elastic thrust of the arms 30 and 31, act on two diametrically opposite fulcrums of the pistons without making contact with the circular walls 63 and thus avoiding the jamming of the pistons 10 and 11 due to imbalances in axial thrust during their retraction into the seats 8 and 9.

Preferably, as seen in figures 9 and 10, the fold lines 39, 40 and 39a, 40a are such that the plane of the rings 28 and 29 includes, together with the plane A, an angle α (alpha) which is smaller than the angle β (beta) included by the arms 30 and 31. In practice, the angles α and β are chosen so that when the brake is in the inactive condition the plane of the rings 28 and 29 intersects the plane A on the side of the pin 34 which connects the arms 30 and 31 (see figure 9), whereas when the pads 12 and 13 are in contact with the braking disk 6 the plane of the rings intersects the plane A on the side which is diametrically opposite to the pin 34 with respect to the axis B (see figure 10).

Advantageously, the teeth 32 and 33 of each pair are arranged in a diametrical plane E which passes through the axis B and is orientated so as to be, in the inactive position of the brake, substantially perpendicular to the plane F which divides in half the angle of oscillation γ (gamma) of the arms 30 and 31 (see figure 11).

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Mechanically-operated disk brake, in particular for two-wheeled vehicles such as bicycles, mopeds, motorcycles and other applications, characterized in that it comprises: a fixed body (1, 2) which defines an opening (5) through which the braking disk (6) rotates and toward which two respective opposite and coaxial seats (8, 9) open; pistons (10, 11) which, together with friction pads (12, 13), compose braking shoes being guided in said seats; a brake actuation lever composed of a pair of arms (30, 31), each arm being rigidly rotationally coupled to a respective piston (10, 11) and having its ends connected to a traction element (D); and means (20-25) arranged between said pistons (10, 11) and said body (1, 2), for axially moving said pistons (10, 11) against one another for the engagement of the friction pads (12, 13) against said braking disk (6) when, by actuating the traction element, said lever is rotated in one direction of rotation; said arms (30, 31) being shaped so as to act elastically against said pistons so as to space said pistons (10, 11) in the position for the disengagement of the pads (12, 13) from the braking disk (6) when the action of the traction element ceases.

2. Disk brake according to claim 1, characterized in that said arms (30, 31) comprise a ring-like portion (28, 29) which is provided with means (32, 33) for rotary coupling to a respective piston (10, 11), said arms (30, 31) being constituted by elastic laminae which are pre-loaded so as to stress said pistons (10, 11) in said disengagement position.

3. Disk brake according to claim 2, characterized in that said rotary coupling means comprise a pair of teeth (32, 33) which are defined diametrically inside said rings (28, 29) and engage respective recesses (26, 27) which are defined peripherally with respect to said pistons (10, 11) and are open laterally and on the front faces of said pistons.

4. Disk brake according to claim 3, characterized in that said recesses (26, 27) comprise a wall (63) which is arranged in a plane which is perpendicular to the axis (B) of the piston, a tooth (64) extending from the center of said wall toward the front face of the piston, the teeth (64) of two diametrical recesses (26, 27) acting as supporting fulcrum for a respective ring (28, 29).

5. Disk brake according to claim 4, characterized in that the arms (30, 31) have two fold lines (39, 39a, 40, 40a) such that the rings (28, 29) include, together with the plane (A) of the disk (6), an angle (α) which is smaller than the angle (β) included by the arms (30, 31) together with said plane, said angles (α, β) being such that when the brake is in inactive condition the plane of the rings (28, 29) intersects the plane (A) of the disk (6) on one side with respect to the axis (B) of the pistons (10, 11) and on the opposite side when the brake is actuated.

6. Disk brake according to one of claims 3 to 5, characterized in that said teeth (32, 33) arranged inside the rings (28, 29) are located in a diametrical plane (E) which passes through the axis (B) of the pistons (10, 11) and is directed so that in the inactive position of the brake it is substantially perpendicular to the plane (F) which divides the lever oscillation angle (γ) in half.

7. Disk brake according to claim 6, characterized in that the arms (30, 31) are tangentially blended with the rings (28, 29) and that said fold lines (39, 39a, 40, 40a) are substantially perpendicular to the line which joins the center of the rings to the coupling point of the traction element.

8. Disk brake according to claim 1, characterized in that said means for axially moving the pistons comprise a plurality of balls (22, 23) which are interposed between said pistons (10, 11) and the bottom of said seats (8, 9) and have a rolling engagement on ramps (20, 21, 24, 25) defined in the opposite faces of said seats (8, 9) and of said pistons (10, 11), said ramps (20, 21, 24, 25) being suitable to cause the movement of the shoes into the position for engagement against said braking disk (6).

9. Disk brake according to claim 8, characterized in that the bottoms of said seats are constituted by disks (17, 18) which are rigidly rotationally coupled to the respective seats (8, 9).

10. Disk brake according to claim 9, characterized in that said disks (17, 18) have a central guiding pin (41, 42) for said pistons (10, 11).

11. Disk brake according to claim 10, characterized in that said pistons have a recess (55, 56) in which the friction pad (12, 13) is embedded so that it is rigidly rotationally coupled.
